# EUROPEAN PATENT APPLICATION

(11) **EP 4 761 154 A1**
(43) Date of publication of application: **17.06.2026**
(21) Application number: 25214251.8
(22) Date of filing: 07.11.2025
(51) Int. Cl.: H04L 1/00, H04W 4/80, H04W 72/20

(54) **CROSS TRANSPORT FOR DECENTRALIZED AND SCALABLE RECEIVER FEEDBACK**

(30) Priority: 16.12.2024 US 202418982855
(71) Applicant: INTEL Corporation, Santa Clara, CA 95054 (US)
(72) Inventor: PETIT, Barath C., 560077 Bangalore (IN); RAO, Raghavendra, 560072 Bangalore (IN); KUMARAPPAN, Jayakumar, 560068 Bangalore (IN); HIREGOUDAR, Vijayakumar, 560100 Bangalore (IN); KANCHARLA, Sreehari, 560035 Bangalore (IN); CHOUDHURY, Deepika, 560037 Bangalore (IN); PATEL, Falguni, 560103 Bangalore (IN); KAMADOLLI, Karunakar, 560037 Bangalore (IN)
(74) Representative: Goddar, Heinz J.

(57) **Abstract**

Embodiments herein relate to techniques by which a Bluetooth low energy (LE) source may identify feedback related to a Bluetooth LE broadcast. The feedback may be provided by an assistant device that is communicatively coupled with a receiver. The feedback may be based on measurements performed by the assistant device and/or the receiver. Based on the feedback, the Bluetooth LE source may alter one or more parameters of a future Bluetooth LE broadcast. Other embodiments may be described and/or claimed.

## Description

### BACKGROUND

Legacy Bluetooth low energy (LE) audio broadcast (which may be referred to as "Auracast") design and specifications may not accommodate feedback from receivers (as may be the case for many broadcast protocols in general due the challenges related to acknowledgement (ACK) feedback, which may be referred to as the ACK implosion challenge). Rather, techniques such as re-transmitting every packet (up to n times as may be configured by an immediate repetition count (IRC) parameter) may be followed.

As a result, an Auracast broadcast source (e.g., a personal computer (PC) and/or some other type of broadcast source) may not have a complete picture of the state of the receivers' conditions i.e., channel quality, packet error rate (PER), etc., and hence may be unable to adjust transmission-related parameters. This may result in conservative non-optimized or unsuitable transmission parameters being used.

### BRIEF DESCRIPTION OF THE DRAWINGS

Embodiments will be readily understood by the following detailed description in conjunction with the accompanying drawings. To facilitate this description, like reference numerals designate like structural elements. Embodiments are illustrated by way of example and not by way of limitation in the figures of the accompanying drawings.
Figure 1 illustrates an example feedback technique, in accordance with various embodiments.
Figure 2 illustrates an example wireless topology, in accordance with various embodiments.
Figure 3 illustrates an example signal protocol use caser, in accordance with various embodiments.
Figure 4 illustrates an example use case related to a hashing algorithm, in accordance with various embodiments.
Figures 5a, 5b, and 5c, (collectively, "Figure 5") illustrates an example wireless feedback technique, in accordance with various embodiments.
Figure 6 illustrates an example wireless feedback technique, in accordance with various embodiments.
Figure 7 illustrates an example wireless feedback technique, in accordance with various embodiments.
Figure 8 illustrates an example wireless feedback technique, in accordance with various embodiments.
Figure 9 is a block diagram illustrating components of a wireless or electronic device, in accordance with various embodiments.
Figure 10 illustrates an example technique, in accordance with embodiments herein.
Figure 11 illustrates an alternative example technique, in accordance with embodiments herein.
Figure 12 illustrates an alternative example technique, in accordance with embodiments herein.

### DETAILED DESCRIPTION

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrase "A or B" means (A), (B), or (A and B).

As previously noted, an Auracast broadcast source may not have a complete picture of the state of the receivers' conditions, and hence may be unable to adjust/optimize transmission-related parameters. Some embodiments below may enable Auracast receivers to send stream quality feedback to the Auracast source via an Auracast assistant, thereby enabling the Auracast source to have a holistic view of stream reception at Auracast receivers and take corrective action accordingly by modulating various stream parameters such as: IRC, physical layer (PHY) modulation, International Organization for Standardization (ISO) timing interval, etc.). It will be recognized that the concepts herein are described with respect to Auracast, however such description is intended as non-limiting discussion. Other embodiments may include or relate to implementations in other wired and/or wireless networks.

Embodiments may include or relate to one or more of the following concepts or aspects to establish a scalable control plane for Auracast receiver feedback:

**Wi-Fi** as **control plane:** This technique may relate to a broadcast and/or Auracast assistant **(e.g. a Wi-Fi-equipped or cellular smartphone, or some other type of Wi-Fi or cellular-enabled device)** that is configured to send receiver feedback to the Auracast source. Two example embodiments are summarized below:

### Wi-Fi beaconing

A broadcast and/or Auracast assistant may be configured to convey feedback via Wi-Fi access point (AP) beacons. This technique may be implemented, for example, in devices that are configured for concurrent Wi-Fi station (STA) and AP mode operation. As a result, the device may be configured to send Wi-Fi AP beacons while in STA and/or Wi-Fi client mode. The Wi-Fi beacons from Auracast assistants containing the stream feedback may be periodically scanned by the Auracast source

### Transmission control protocol (TCP)/User datagram Protocol (UDP) over Wi-Fi

Broadcast Assistants convey feedback to TCP or UDP server running on the source or on the cloud.

**Bluetooth as control plane:** This technique may relate to using Bluetooth as a control plane in a manner that does not conflict with Bluetooth Auracast streaming traffic. Example embodiments wherein broadcast and/or Auracast assistants are configured to send feedback data may include:

### Decentralized Hashing

One technique may include or relate to a decentralized based zero deploy technique for receiver registration and feedback via amalgamation of Universal Hashing and Bluetooth Periodic Advertising with Response (PAwR). In some cases, the technique may further include criteria by which hash collisions may be handled.

### Asynchronous Feedback

Another technique may include or relate to asynchronous feedback from receivers via Bluetooth advertising beacons with advertising intervals that are inversely proportional to a receiver's channel quality.

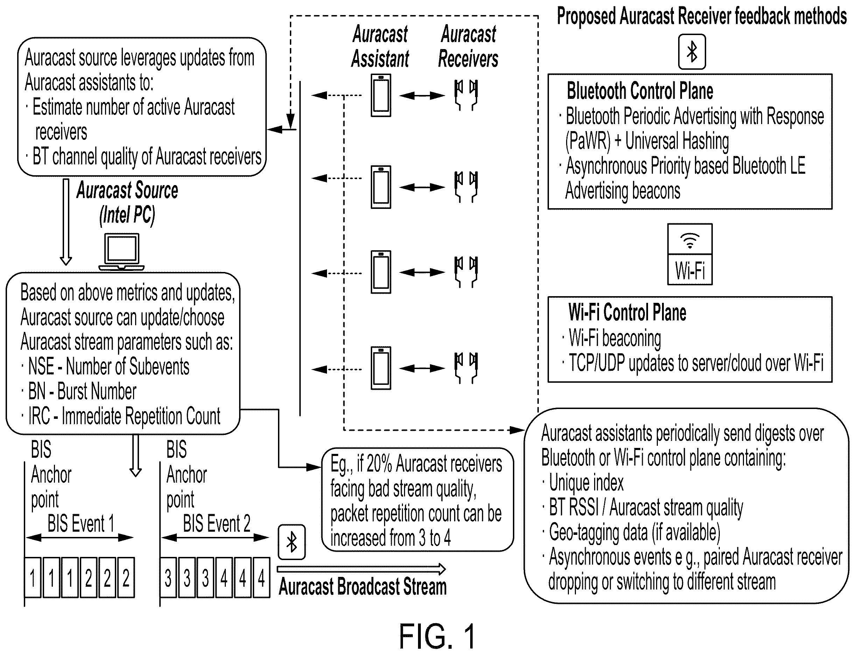

Figure 1 depicts an example high-level depiction of the use of a control plane such as a Bluetooth and/or Wi-Fi control plane to provided Auracast feedback, as will be explained in greater detail in the present disclosure.

### LE Audio Broadcast and lack of receiver feedback

Auracast is expected to change the Bluetooth audio user experience (UX) with a wide range of use cases and applications. Example Auracast applications may include one or more of the following: Seamless audio sharing in home and enterprise environment; directed announcements and advertising in public spaces (airports, railway stations, hotels, retail outlets etc.); personalized audio streams e.g., language based in lectures, cinema halls etc.; etc.

However, as previously noted, legacy Auracast implementations and/or specifications may not include a feedback scheme for receivers to convey stream quality feedback, which may result in non-optimized use of bandwidth.

Embodiments herein relate to techniques to address the receiver feedback problem in Auracast, and may leverage one or both of Bluetooth and Wi-Fi as a control plane for the feedback. The techniques herein may leverage the unique Auracast topology and Bluetooth/Wi-Fi channel characteristics (e.g., one-hop, slotted transmission/reception (Tx/Rx), etc.) to achieve scalable and decentralized receiver feedback in Auracast.

### Auracast topology and concepts

An example Auracast topology may include the following three components:
**Auracast Source:** The broadcaster and source of the stream. An Auracast source may be, for example, a personal computer (PC), a laptop, a server, and/or some other type of source.

**Auracast Receiver:** An Auracast receiver may be a consumer of the Auracast stream that is broadcast by the Auracast Source. An example of such a receiver may be a Bluetooth headset, Bluetooth earbuds, etc. Generally, the Auracast receiver may be capable of reproducing the audio stream for a user (e.g., via one or more speakers and/or some other type of audio output).

**Auracast Assistant (which may also be referred to as a "Broadcast Assistant"):** An electronic device that acts as an intermediary between the Auracast Receiver and the Auracast Source. The Auracast Assistant may help the Auracast receiver to scan for, select, and/or join the stream output by the Auracast Source. An Auracast Assistant may be, for example, a smartphone, a tablet, a personal digital assistant (PDA), and/or some other type of electronic device that is connected to the Auracast Receiver, and may therefore present a user interface by which the user may peruse and/or select an Auracast stream. Generally, the Auracast Assistant may be responsible for providing feedback regarding the Auracast stream to the Auracast source, in accordance with embodiments herein.

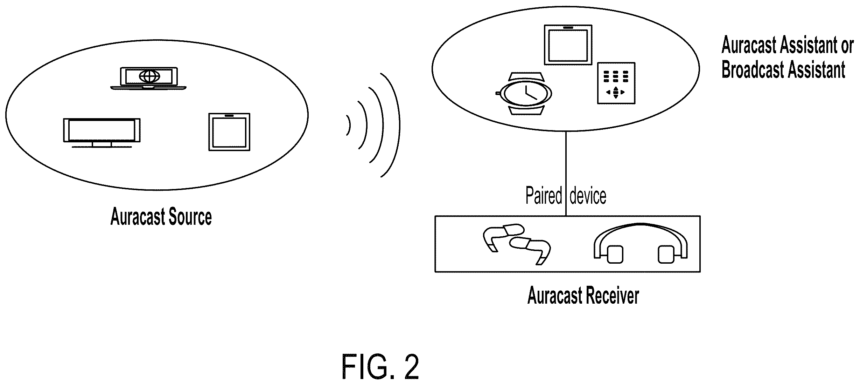

Figure 2 depicts an example of an Auracast topology, in accordance with various embodiments.

### Auracast Assistants

As previously described, Auracast assistants may be co-located with an Auracast receiver, and may be able to assess the channel conditions accurately. It will be understood that the "co-location" may be within a generally specified Bluetooth-related tolerance such as within a radius of several meters, although the specific distance may be a factor of: whether one or more materials (e.g., doors, walls, people, etc.) are between the assistant and the receiver, between the assistant and the source, etc.; the specific power specifications of the source, assistant, and/or receiver; the specific materials or elements used in the electronic devices, etc. However, in some embodiments, the Auracast assistant and the Auracast receiver may be located in or on a same electronic device (e.g., a smartphone with one or more direct audio outputs such as a wired headphone port, an on-board speaker, etc.). Generally, stream-quality feedback may be transmitted to an Auracast source by an Auracast assistant rather than an Auracast receiver. Auracast assistants may be better to send stream-quality feedback, as opposed to an Auracast receiver, which may have lower transmit power capabilities and/or other constraints.

As one example of channel condition assement and feedback provision performed by an Auracast assistant, it may be recognized that the Auracast source may transmit one or more Bluetooth advertising beacons that include Auracast stream meta-information, as described elsewhere herein. The Auracast assistant may be able to identify and process said beacons and perform one or more measurements based on said beacons. Such measurements may include, for example received signal strength indicator (RSSI), reference signal received power (RSRP), signal to interference noise ratio (SINR), packet drops, PER, and/or some other measurement. Because the Auracast assistant and Auracast receiver may be co-located, it may be recognized that the channel conditions assessed at the Auracast assistant may also apply to the Auracast receiver.

Additionally or alternatively, the Auracast receiver may be configured to perform one or more of the above-described measurements. The Auracast receiver may transmit (e.g., via a low duty cycle link such as a Bluetooth link), one or more indications of one or more of the above-described measurements to the Auracast assistant. In embodiments, the Auracast receiver may send the feedback to the Auracast assistant with a relatively low transmit (Tx) power due to proximity of the Auracast assistant to the Auracast receiver, thereby inducing lesser power overhead as opposed to sending the feedback directly from the Auracast receiver directly to the Auracast source. The Auracast assistant may then send the feedback to the Auracast source. It will be understood that, in various embodiments, both of the above-described options may be used either separately or in combination with one another.

### Examples of Decentralized Auracast Feedback Schemes

The solutions herein may enable Auracast receivers to send stream quality feedback to the Auracast source (Intel PC) thereby enabling the Auracast source to have a holistic view of stream reception at the receivers and take corrective action accordingly by modulating the stream parameters (IRC, PHY modulation, iso interval etc.).

As previously discussed, embodiments herein may allow the establishmient of a scalable control plane for Auracast receiver feedback. In embodiments, the Auracast source may receive, via the Auracast Assistant, receiver feedback to modulate the broadcast stream parameters, which may result in savings of airtime and improved latency and power-consumption at the Auracast receiver. Examples of such parameters may include IRC, burst number (BN), number of subevents (NSE), PHY parameters (e.g., 1 megasymbol per second (1M) operation, 2 megasymbol per second (2M) operation, CODED PHY operation, etc.), a parameter related to an ISO interval, etc.

In one non-limiting example, if all the Auracast receivers are experiencing excellent stream quality, as may be measured using parameters such as PER, RSSI, etc., then the Auracast source may reduce the IRC parameter for the broadcast stream from 4 to 2. Such reduction may result in airtime/bandwidth savings, reduced rendering latency at receivers, reduced Tx/Rx power requirements, etc.

In another non-limiting example, the Auracast source may be configured to modulate Tx power based on feedback from an Auracast receiver. Such modulation may be based on parameters such as RSSI estimation, Bluetooth channel sounding, etc. In some embodiments, the modulation may be based on a lowest received feedback value. For example, if multiple Auracast receivers provide feedback, a value received from an Auracast receiver that is physically furthest from the Auracast source, or has a high number of physical elements placed between the Auracast source and the Auracast receiver (e.g., walls, etc.) may provide a lowest feedback value for RSSI, channel sounding, and/or some other element. The Auracast Tx power may be modulated accordingly to ensure that such Auracast receiver has a acceptable Rx values

### Example Aspects of the Present Disclosure

Table 2 addresses various example aspects of embodiments herein:

**Table 2 - Examples of aspects of the present disclosure**

| **Aspects** | **Comments** |
|---|---|
| Resource Overhead at Auracast Receiver | - Auracast assistant may transmit stream quality feedback to the Auracast source |
| | - Auracast assistant may operate with relaxed power constraints. |
| | - Auracast assistant may be configured to opt in or out of need-based asynchronous feedback. |
| | - Auracast receiver may not participate in feedback protocol. |
| Protocol Complexity at the Auracast Source | **Bluetooth as Control Plane** |
| | - Auracast source background Bluetooth LE scan or sending Bluetooth PawR may not induce signaling overhead, particularly if the Auracast source leveraged a dual-antenna chain architecture. |
| | **Wi-Fi as Control Plane** |
| | - Wi-Fi beacons or data may be transmitted in PHY signaling orthogonal to Bluetooth PHY signaling. |
| | - For example, the beacons or data may be transmitted in the Wi-Fi 5 or 6 gigahertz (GHz) band while Bluetooth operates at 2.4 GHz (or vice-versa). |
| Security and Privacy | - Feedback transmissions may be encrypted, for example by an encryption broadcast key. |
| | - The same key may be used to encrypt feedback transmissions for both the Wi-Fi and Bluetooth control planes. |

### Bluetooth as control plane

Some example aspects that may be applicable to use of Bluetooth as a control plane may include:

### Protocol overhead and complexity

The Auracast Source background Bluetooth LE scan and/or Bluetooth PAwR activities may not induce signaling/power overhead, particularly if the Auracast source has two Bluetooth antenna chains, and one chain is reserved for Bluetooth LE scanning (e.g., for Bluetooth advertisements). In some embodiments, an Auracast stream broadcast key may be used to encrypt the feedback transmissions. Additionally or alternatively, BT PAwR may provide native support for advertising payload encryption.

### Slot-based synchronous Auracast feedback

One embodiment may leverage Bluetooth PawR, which may facilitate or allow for synchronous feedback slots for a set of nodes. However, the mapping of receivers to the feedback slots may not be specified, and may be vendor dependent.

To address slot assignment, and as described in greater detail below, Universal Hashing may be applied to Bluetooth PawR, which may result in a decentralized zero deploy scheme for the Auracast assistants to arrive at a distributed consensus with respect to feedback slot assignment and/or hash collisions.

### Bluetooth PAwR overview

Bluetooth PAwR may enable a set of receivers to send feedback to an advertiser in their respective feedback slots. There may be up to 128 Bluetooth PawR subevents, with each subevent containing a maximum of 255 response slots. This configuration may be leveraged for Auracast feedback. However, the mapping of Auracast receivers to the feedback slots may not be specified, and may be vendor dependent. Thus, optimized and decentralized mapping schemes may be leveraged and deployed as part of vendor optimizations. As noted, embodiments herein may relate to use of Universal Hashing and/or a modified version of Universal Hashing in conjunction with Bluetooth PAwR for slotted receiver feedback.

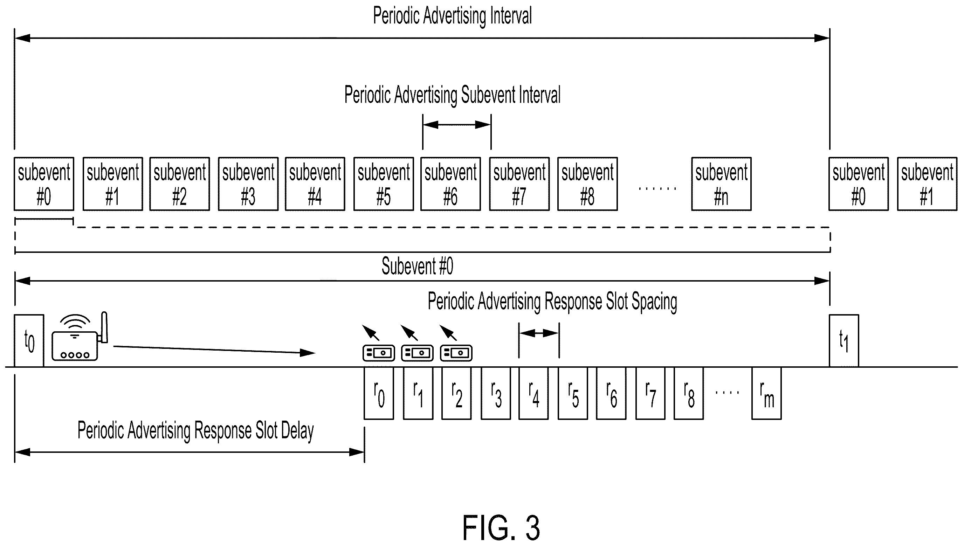

Figure 3 depicts an example depiction of Bluetooth PAwR

### Universal Hashing Overview

Traditional hashing with a single hash function may result in the possibility of hash collisions. To circumvent hash collisions, Universal Hashing may be used wherein to hash a given key, one of the hash functions ***hᵢ*** from the set ***H*** = {***h*₁***,* ***h*₂***,* ... , ***hₙ***} is chosen randomly. This may reduces the hash collision probability to 1/*m* where all key values are hashed to the set **{1, 2, 3, ... *m*}.** In embodiments herein, there may be up to 255 response slots available for each Bluetooth PAwR subevent. Thus, the hash collision probability may be 1/255, or 0.00392.

### Combining Bluetooth PAwR and Universal Hashing for Decentralized Auracast feedback

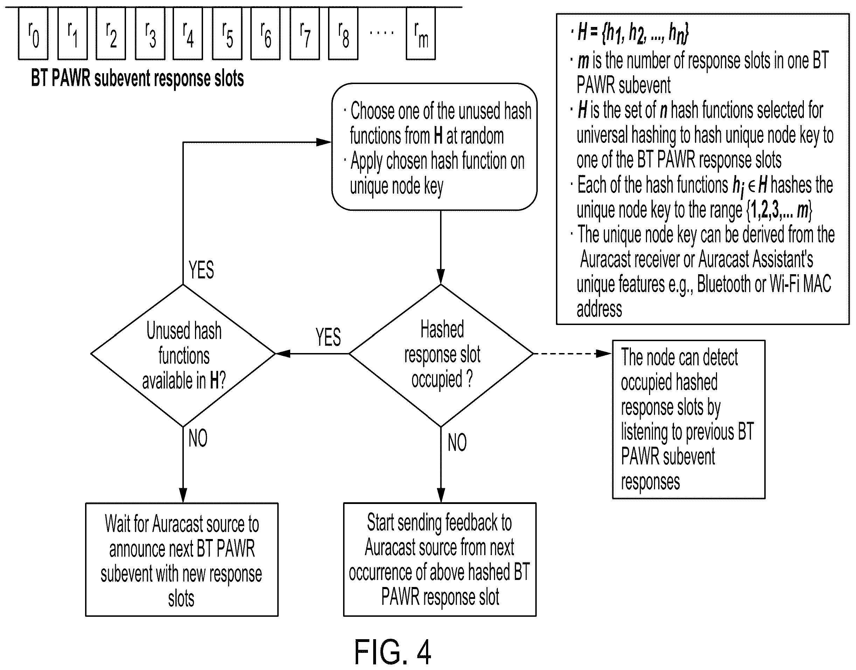

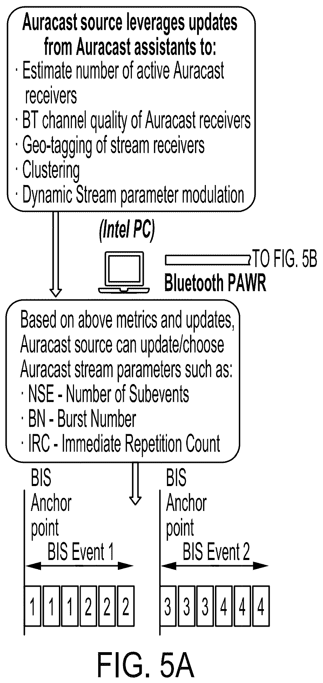

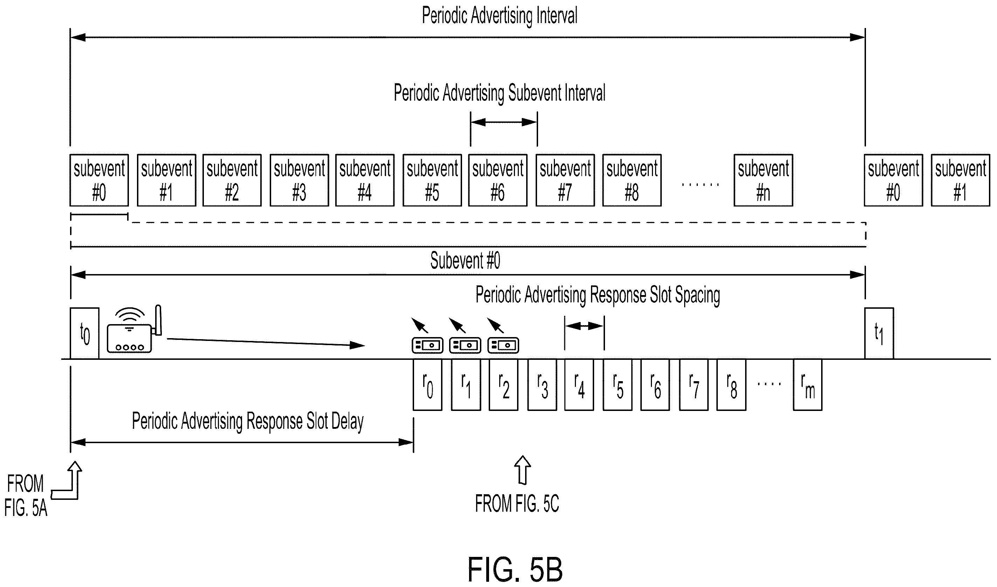

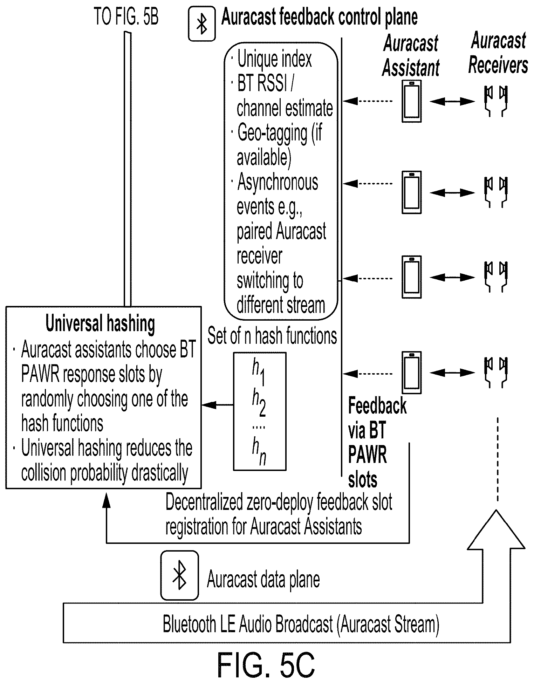

As previously noted Bluetooth PAwR and Universal Hashing may be combined with extensions applied for collision handling, resulting in a decentralized scheme that enables Auracast assistants to register for Bluetooth PAwR subevent response slots autonomously in a distributed manner. Embodiments may be desirable for a scenario involving many Auracast receivers. An example operation is described in the below Table 3 and further illustrated in Figure 4. An example embodiment related to use of Bluetooth PAwR and Universal Hashing may be shown in Figure 5.

**Table 3 - Example Discussion of Hashing Application to Bluetooth PAwR**

| **Algorithm operation at Auracast Assistant to obtain Bluetooth PAwR subevent response slot id** | **Algorithm operation at Auracast Source to manage Bluetooth PAwR subevent response slots** |
|---|---|
| - Construct unique node key as a function of identifying features e.g., Auracast assistant's Bluetooth or Wi-Fi medium access control (MAC) address or combining with Auracast receiver's Bluetooth MAC address; | - Monitor response slot registration and traffic for current Bluetooth PAwR subevent |
| | - Once the response slots are fully registered or cross a threshold, announce a new Bluetooth PAwR subevent |
| - Choose one of the hash functions from Universal Hashing function set and hash the key; | - Subsequent new registrations will map to slots in the new Bluetooth PAwR subevent |
| If no collision*, start using the slot else continue hashing till all hashing functions in set are exhausted; | |
| If collision observed with all hashing functions in set, wait for Auracast Source to announce new Bluetooth PAwR subevent containing additional response slots | |
| *NOTE: Nodes can detect hash collisions by listening to previous Bluetooth PAwR subevent response slots | |

### Asynchronous Auracast feedback via Bluetooth LE Advertising beacons

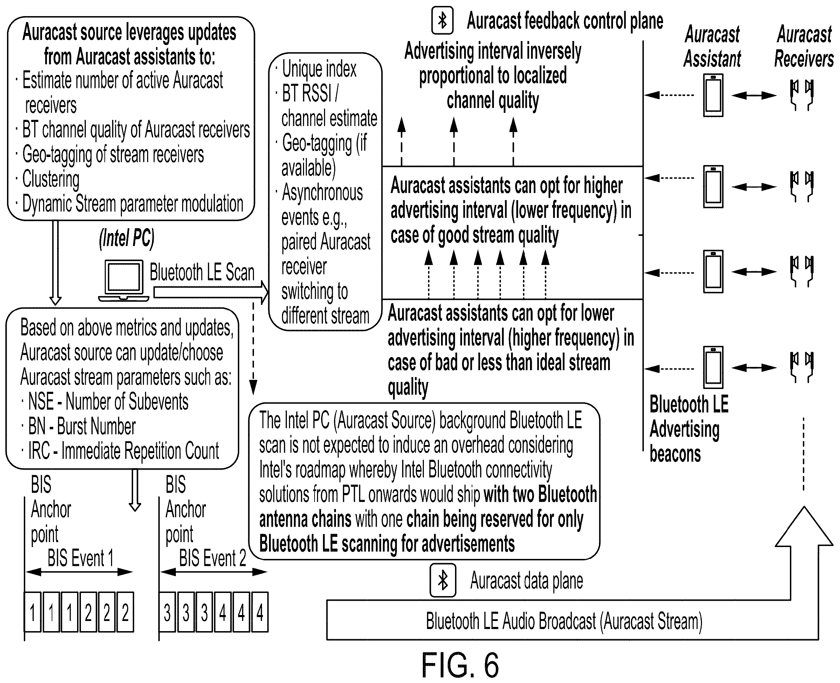

In embodiments related to asynchronous feedback, Auracast Assistants send asynchronous feedback to the Auracast Source via Bluetooth advertisement beacons. The feedback may be sent asynchronously as needed without a synchronous slot. This may be contrasted with, for example, embodiments related to Bluetooth PAwR. Hence, to modulate the priority of the updates proportionate (rather inversely proportional) to the perceived stream quality, the Auracast Assistants may choose an advertising interval that is inversely proportional to the localized channel quality, i.e., receivers experiencing good quality may choose larger advertising intervals and, conversely receivers experiencing adverse quality may opt to smaller advertising intervals (which may have a higher frequency). In some embodiments, random backoff may additionally/alternatively be performed. An example of this embodiment is shown in Figure 6.

### Use of Wi-Fi as a Control Plane,

As previously noted, in some embodiments Wi-Fi may additionally/alternatively be used as a control plane for transmission of feedback to an Auracast source. Such embodiments may include one or more of the following aspects: few salient aspects common to both the proposals are listed below:
- Wi-Fi beacons or data may be transmitted in a PHY layer or using PHY signaling that is orthogonal to Bluetooth PHY.
- Wi-Fi transmissions may be performed in the ~5 or 6 GHz frequency band, and the Bluetooth transmissions may be in the ~ 2.4 GHz frequency band (or vice-versa).
- An Auracast broadcast stream key may be used to encrypt the Wi-Fi beacons' payload and/or TCP/UDP data.

### Auracast feedback via Wi-Fi beaconing

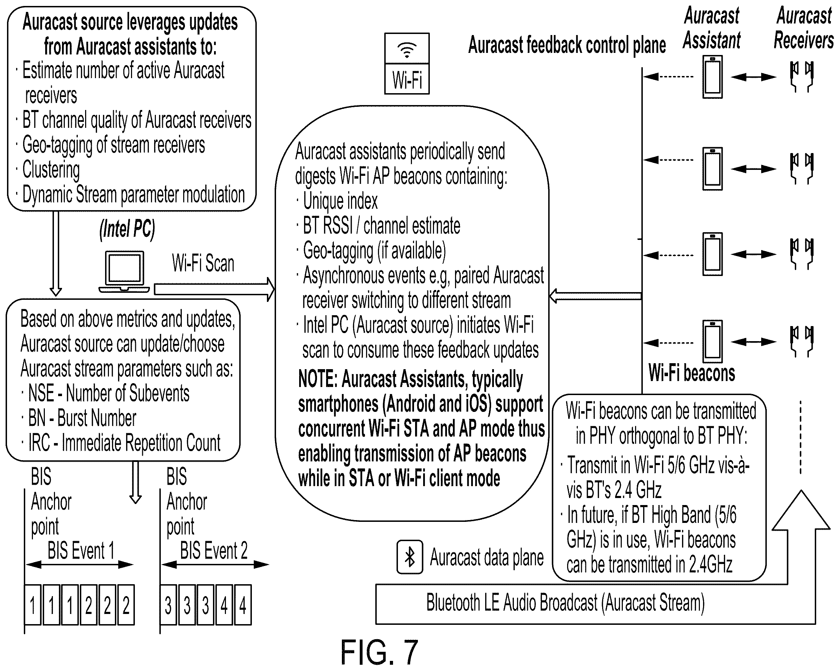

In this embodiment, Wi-Fi capabilities of the Auracast Assistants may be leveraged to establish a Wi-Fi control plane that is orthogonal to the Bluetooth PHY in use for the Auracast streaming. As noted, Auracast Assistants may be configured to transmit their feedback data asynchronously via Wi-Fi beacons on an as-needed basis. It will be noted that Wi-Fi beacons may be required to be transmitted by an Auracast Assistant that is operating in a Wi-Fi AP mode. As a result, in some embodiments, an Auracast Assistant may be configured to support concurrent operation in both station (STA) mode and AP mode, thereby enabling an Auracast assistant to transmit Wi-Fi beacons while in Wi-Fi connected STA mode. In some embodiments, an Auracast source may periodically initiate Wi-Fi scan or background Wi-Fi scan to read the Wi-Fi beacons that contain stream feedback data from the Auracast assistants. An example of this operation is illustrated in Figure 7.

### Auracast Feedback via TCP/UDP (over Wi-Fi)

This embodiment may relate to use of an Auracast assistant's Wi-Fi capabilities to establish a Wi-Fi control plane where feedback data is transmitted via TCP/UDP to either a server running on the Auracast source or in the cloud.

For example, in some embodiments the feedback may be transmitted to a UDP server running on or in an Auracast source. Such feedback may be transmitted on a best-effort basis.

Additionally or alternatively, the feedback may be transmitted to a TCP server that is hosted in the cloud. This approach may provide various advantages such as offloading of server processing to the cloud from an Auracast source that is able to periodically read consolidated update digests from the cloud server. Another advantage is that cloud infrastructure may be abstracted by Cloud provider interfaces with respect to aspects like scalability, latency, availability etc.

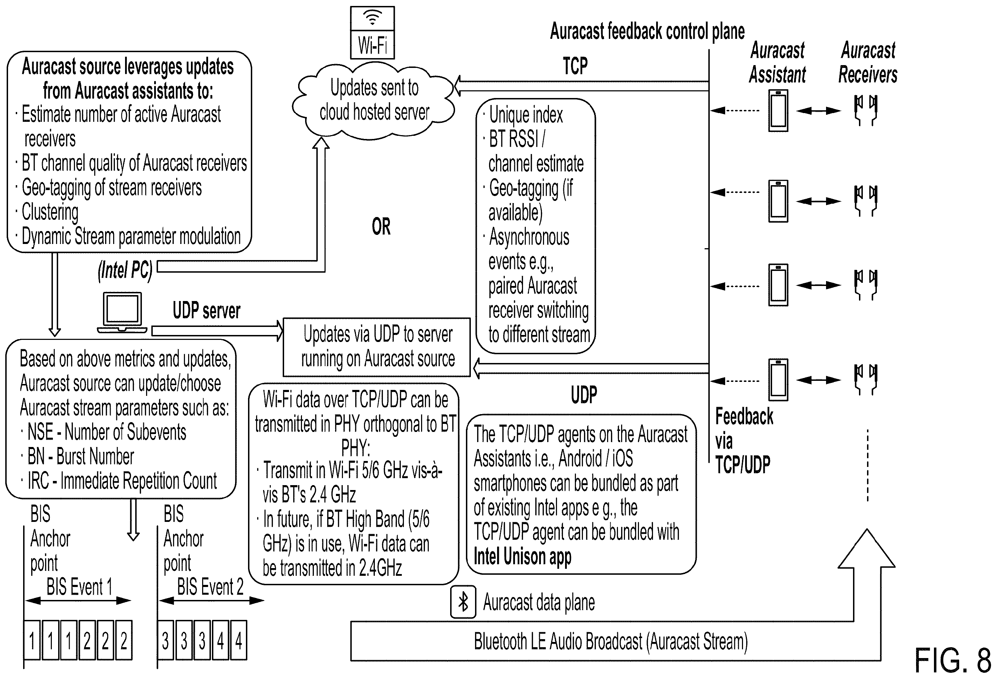

This embodiment may differ from the previously-described Wi-Fi control plane approach in that the Auracast assistants may not need to transmit Wi-Fi AP beacons. Additionally, the Auracast source may not be required to initiate a periodic or background Wi-Fi scan. An example of this embodiment is depicted in Figure 8.

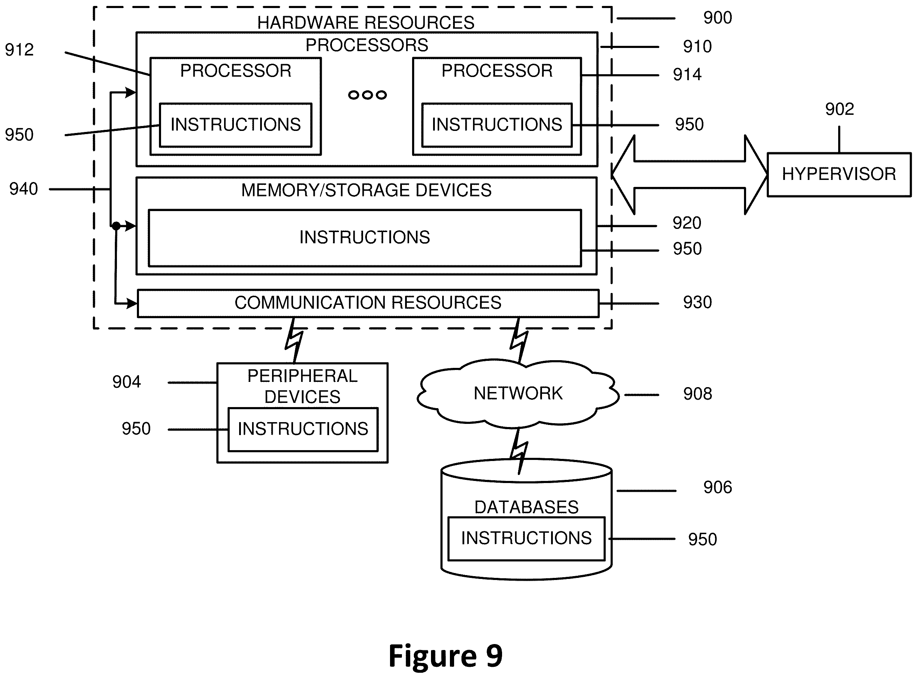

Figure 9 is a block diagram illustrating components, according to some example embodiments, able to read instructions from a machine-readable or computer-readable medium (e.g., a non-transitory machine-readable storage medium) and perform any one or more of the methodologies discussed herein. Specifically, Figure 9 shows a diagrammatic representation of hardware resources 900 including one or more processors (or processor cores) 910, one or more memory/storage devices 920, and one or more communication resources 930, each of which may be communicatively coupled via a bus 940 or other interface circuitry. For embodiments where node virtualization (e.g., NFV) is utilized, a hypervisor 902 may be executed to provide an execution environment for one or more network slices/sub-slices to utilize the hardware resources 900. The depicted hardware resource 900 may be, implement, or be part of an electronic device such as an Auracast source, assistant, and/or receiver.

The processors 910 may include, for example, a processor 912 and a processor 914. The processors 910 may be, for example, a central processing unit (CPU), a reduced instruction set computing (RISC) processor, a complex instruction set computing (CISC) processor, a graphics processing unit (GPU), a DSP such as a baseband processor, an ASIC, an FPGA, a radiofrequency integrated circuit (RFIC), another processor (including those discussed herein), or any suitable combination thereof.

The memory/storage devices 920 may include main memory, disk storage, or any suitable combination thereof. The memory/storage devices 920 may include, but are not limited to, any type of volatile, non-volatile, or semi-volatile memory such as dynamic random access memory (DRAM), static random access memory (SRAM), erasable programmable read-only memory (EPROM), electrically erasable programmable read-only memory (EEPROM), Flash memory, solid-state storage, etc.

The communication resources 930 may include interconnection or network interface controllers, components, or other suitable devices to communicate with one or more peripheral devices 904 or one or more databases 906 or other network elements via a network 908. For example, the communication resources 930 may include wired communication components (e.g., for coupling via USB, Ethernet, etc.), cellular communication components, NFC components, Bluetooth^{®} (or Bluetooth^{®} Low Energy) components, Wi-Fi^{®} components, and other communication components.

Instructions 950 may comprise software, a program, an application, an applet, an app, or other executable code for causing at least any of the processors 910 to perform any one or more of the methodologies discussed herein. The instructions 950 may reside, completely or partially, within at least one of the processors 910 (e.g., within the processor's cache memory), the memory/storage devices 920, or any suitable combination thereof. Furthermore, any portion of the instructions 950 may be transferred to the hardware resources 900 from any combination of the peripheral devices 904 or the databases 906. Accordingly, the memory of processors 910, the memory/storage devices 920, the peripheral devices 904, and the databases 906 are examples of computer-readable and machine-readable media.

### EXAMPLE PROCEDURES

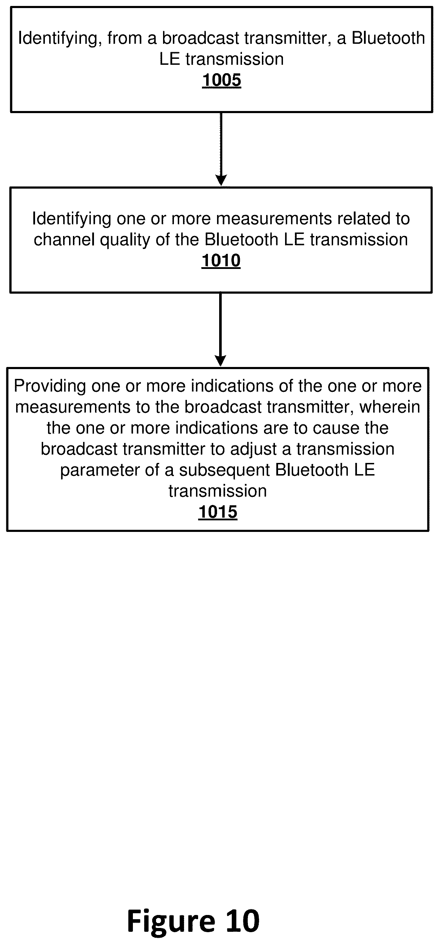

In some embodiments, the electronic device(s), network(s), system(s), chip(s) or component(s), or portions or implementations thereof, of Figures 1-9, or some other figure herein, may be configured to perform one or more processes, techniques, or methods as described herein, or portions thereof. One such process is depicted in Figure 10.

The process of Figure 10 may include or relate to a method to be performed by an electronic device. In some embodiments, the electronic device may be an Auracast Assistant. The process may include identifying, at 1005 from a broadcast transmitter, a Bluetooth low energy (LE) transmission; identifying, at 1010 one or more measurements related to channel quality of the Bluetooth LE transmission; and providing, at 1015, one or more indications of the one or more measurements to the broadcast transmitter, wherein the one or more indications are to cause the broadcast transmitter to adjust a transmission parameter of a subsequent Bluetooth LE transmission.

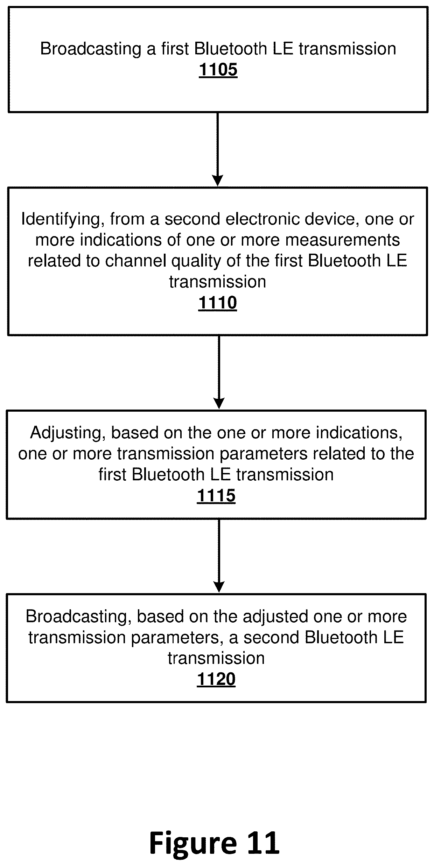

Another such process is depicted in Figure 11. The process of Figure 11 may include or relate to method to be performed by an electronic device. The electronic device may be, for example, an Auracast broadcast source. The process may include broadcasting, at 1105, a first Bluetooth low energy (LE) transmission; identifying, at 1110 from a second electronic device, one or more indications of one or more measurements related to channel quality of the first Bluetooth LE transmission; adjusting, at 1115 based on the one or more indications, one or more transmission parameters related to the first Bluetooth LE transmission; and broadcasting, at 1120 based on the adjusted one or more transmission parameters, a second Bluetooth LE transmission.

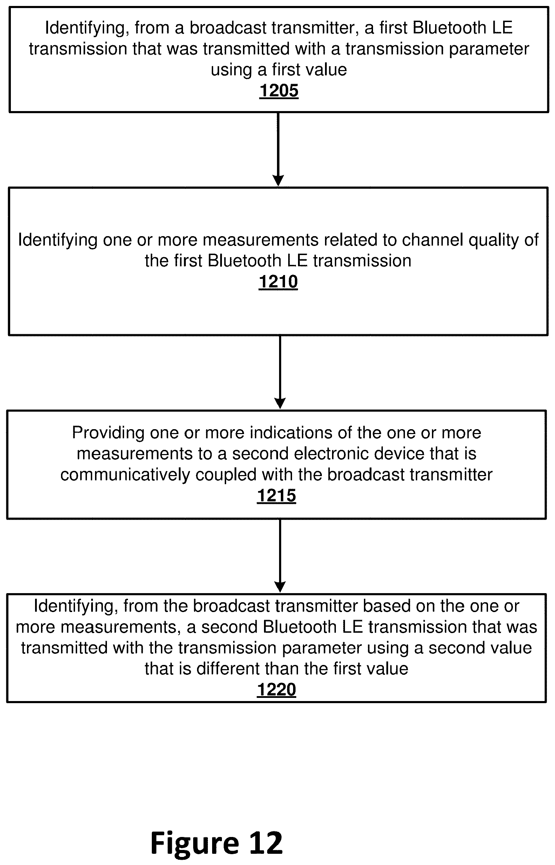

Another such process is depicted in Figure 12. The process of Figure 12 may include or relate to a method to be performed by an electronic device. The electronic device may be, for example, an Auracast receiver. The process may include identifying, at 1205 from a broadcast transmitter, a first Bluetooth low energy (LE) transmission that was transmitted with a transmission parameter using a first value; identifying, at 1210, one or more measurements related to channel quality of the first Bluetooth LE transmission; providing, at 1215, one or more indications of the one or more measurements to a second electronic device that is communicatively coupled with the broadcast transmitter; and identifying, at 1220 from the broadcast transmitter based on the one or more measurements, a second Bluetooth LE transmission that was transmitted with the transmission parameter using a second value that is different than the first value.

For one or more embodiments, at least one of the components set forth in one or more of the preceding figures may be configured to perform one or more operations, techniques, processes, and/or methods as set forth in the example section below. For example, the baseband circuitry as described above in connection with one or more of the preceding figures may be configured to operate in accordance with one or more of the examples set forth below. For another example, circuitry associated with a UE, base station, network element, etc. as described above in connection with one or more of the preceding figures may be configured to operate in accordance with one or more of the examples set forth below in the example section.

### EXAMPLES

Example 1 may include or relate to a Bluetooth source configured to: receive feedback related to transmission of an audio Bluetooth stream by the Bluetooth source; and change a parameter of the audio Bluetooth stream based on the feedback.

Example 2 may include the subject matter of example 1, and/or some other example herein, wherein the Bluetooth source is an Auracast source.

Example 3 may include the subject matter of any of examples 1-2, and/or some other example herein, wherein the feedback is transmitted via a Wi-Fi control plane.

Example 4 may include the subject matter of any of examples 1-3, and/or some other example herein, wherein the feedback is transmitted via a Bluetooth control plane.

Example 5 may include the subject matter of any of examples 1-4, and/or some other example herein, wherein the feedback is received from an intermediate device that is different than a receiver of the audio Bluetooth stream.

Example 6 may include the subject matter of example 5, and/or some other example herein, wherein the feedback is based on one or more measurements performed by the receiver of the audio Bluetooth stream.

Example 7 may include the subject matter of any of examples 1-6, and/or some other example herein, wherein the parameter is related to an immediate repetition count (IRC) of the Bluetooth audio stream.

Example 8 may include the subject matter of any of examples 1-7, and/or some other example herein, wherein the parameter is related to a physical layer (PHY) parameter of the Bluetooth audio steram.

Example 9 may include the subject matter of any of examples 1-8, and/or some other example herein, wherein the parameter is related to an International Organization for Standardization (ISO) timing interval of the Bluetooth audio stream.

Example 10 may include a method to be performed by an electronic device, wherein the method comprises: identifying, from a broadcast transmitter, a Bluetooth low energy (LE) transmission; identifying one or more measurements related to channel quality of the Bluetooth LE transmission; and providing one or more indications of the one or more measurements to the broadcast transmitter, wherein the one or more indications are to cause the broadcast transmitter to adjust a transmission parameter of a subsequent Bluetooth LE transmission.

Example 11 may include the method of examplee 10, and/or some other example herein, wherein the one or more measurements are measurements performed by the electronic device.

Example 12 may include the method of any one or more of examples 10-11, and/or some other example herein, wherein the one or more measurements are measurements performed by a second electronic device that is wirelessly coupled with the electronic device, and wherein values related to the one or more measurements are received by the electronic device from the second electronic device.

Example 13 may include the method of any one or more of examples 10-12, and/or some other example herein, wherein the one or more indications are provided to the broadcast transmitter via a wi-fi control plane.

Example 14 may include the method of example 13, and/or some other example herein, wherein the one or more indications are provided to the broadcast transmitter via one or more wi-fi access point (AP) beacons.

Example 15 may include the method of example 13, and/or some other example herein, wherein the one or more indications are provided to the broadcast transmitter via transmission to a server that is communicatively coupled with the electronic device and the broadcast transmitter.

Example 16 may include the method of any one or more of examples 10-15, and/or some other example herein, wherein the one or more indications are provided to the broadcast transmitter via a Bluetooth control plane.

Example 17 may include the method of example 16, and/or some other example herein, wherein the method further comprises registering with the Bluetooth transmitter based on Universal Hashing and Bluetooth Periodic Advertising with Response (PAWR).

Example 18 may include the method of example 16, and/or some other example herein, wherein the one or more indications are provided to the broadcast transmitter via one or more Bluetooth advertising beacons.

Example 19 may include the method of any one or more of examples 10-18, and/or some other example herein, wherein the Bluetooth LE broadcast is an Auracast broadcast.

Example 20 may include a method to be performed by an electronic device, wherein the method comprises: broadcasting a first Bluetooth low energy (LE) transmission; identifying, from a second electronic device, one or more indications of one or more measurements related to channel quality of the first Bluetooth LE transmission; adjusting, based on the one or more indications, one or more transmission parameters related to the first Bluetooth LE transmission; and broadcasting, based on the adjusted one or more transmission parameters, a second Bluetooth LE transmission.

Example 21 may include the method of example 20, and/or some other example herein, wherein the one or more measurements are measurements performed by the second electronic device.

Example 22 may include the method of any one or more of examples 20-21, and/or some other example herein, wherein the one or more measurements are measurements performed by a third electronic device that is wirelessly coupled to, and collocated with, the second electronic device.

Example 23 may include the method of any one or more of examples 20-22, and/or some other example herein, wherein the one or more indications are provided to the broadcast transmitter via a wi-fi control plane.

Example 24 may include the method of any one or more of examples 20-23, and/or some other example herein, wherein the one or more indications are provided to the broadcast transmitter via a Bluetooth control plane.

Example 25 may include a method to be performed by an electronic device, wherein the method comprises: identifying, from a broadcast transmitter, a first Bluetooth low energy (LE) transmission that was transmitted with a transmission parameter using a first value; identifying one or more measurements related to channel quality of the first Bluetooth LE transmission; providing one or more indications of the one or more measurements to a second electronic device that is communicatively coupled with the broadcast transmitter; and identifying, from the broadcast transmitter based on the one or more measurements, a second Bluetooth LE transmission that was transmitted with the transmission parameter using a second value that is different than the first value.

Example 26 may include the method of example 25, and/or some other example herein, wherein the transmission parameter is related to physical layer (PHY) modulation, timing interval, or immediate repetition count (IRC).

Example 27 may include the method of any one or more of examples 25-26, and/or some other example herein, wherein the one or more measurements are related to received signal strength indicator (RSSI), reference signal received power (RSRP), signal to interference noise ratio (SINR), packet drops, or packet error rate (PER).

Example 28 may include the method of any one or more of examples 25-27, and/or some other example herein, wherein the Bluetooth LE broadcast is an Auracast broadcast.

Example 29 may include the method of any one or more of examples 25-28, and/or some other example herein, wherein the second electronic device is to provide the one or more indications of the one or more measurements to the broadcast transmitter via a wi-fi control plane or a Bluetooth control plane.

Example 30 may include an apparatus comprising means to perform one or more elements of a method described in or related to any of examples 1-29, or any other method or process described herein.

Example 31 may include one or more non-transitory computer-readable media comprising instructions to cause an electronic device, upon execution of the instructions by one or more processors of the electronic device, to perform one or more elements of a method described in or related to any of examples 1-29, or any other method or process described herein.

Example 32 may include an apparatus comprising logic, modules, or circuitry to perform one or more elements of a method described in or related to any of examples 1-29, or any other method or process described herein.

Example 33 may include a method, technique, or process as described in or related to any of examples 1-29, or portions or parts thereof.

Example 34 may include an apparatus comprising: one or more processors and one or more computer-readable media comprising instructions that, when executed by the one or more processors, cause the one or more processors to perform the method, techniques, or process as described in or related to any of examples 1-29, or portions thereof.

Example 35 may include a signal as described in or related to any of examples 1-29, or portions or parts thereof.

Example 36 may include a datagram, packet, frame, segment, protocol data unit (PDU), or message as described in or related to any of examples 1-29, or portions or parts thereof, or otherwise described in the present disclosure.

Example 37 may include a signal encoded with data as described in or related to any of examples 1-29, or portions or parts thereof, or otherwise described in the present disclosure.

Example 38 may include a signal encoded with a datagram, packet, frame, segment, protocol data unit (PDU), or message as described in or related to any of examples 1-29, or portions or parts thereof, or otherwise described in the present disclosure.

Example 39 may include an electromagnetic signal carrying computer-readable instructions, wherein execution of the computer-readable instructions by one or more processors is to cause the one or more processors to perform the method, techniques, or process as described in or related to any of examples 1-29, or portions thereof.

Example 40 may include a computer program comprising instructions, wherein execution of the program by a processing element is to cause the processing element to carry out the method, techniques, or process as described in or related to any of examples 1-29, or portions thereof.

Example 41 may include a signal in a wireless network as shown and described herein.

Example 42 may include a method of communicating in a wireless network as shown and described herein.

Example 43 may include a system for providing wireless communication as shown and described herein.

Example 44 may include a device for providing wireless communication as shown and described herein.

Any of the above-described examples may be combined with any other example (or combination of examples), unless explicitly stated otherwise. The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

### Terminology

For the purposes of the present document, the following terms and definitions are applicable to the examples and embodiments discussed herein.

The term "circuitry" as used herein refers to, is part of, or includes hardware components such as an electronic circuit, a logic circuit, a processor
(shared, dedicated, or group) and/or memory (shared, dedicated, or group), an Application Specific Integrated Circuit (ASIC), a field-programmable device (FPD) (e.g., a field-programmable gate array (FPGA), a programmable logic device (PLD), a complex PLD (CPLD), a high-capacity PLD (HCPLD), a structured ASIC, or a programmable SoC), digital signal processors (DSPs), etc., that are configured to provide the described functionality. In some embodiments, the circuitry may execute one or more software or firmware programs to provide at least some of the described functionality. The term "circuitry" may also refer to a combination of one or more hardware elements (or a combination of circuits used in an electrical or electronic system) with the program code used to carry out the functionality of that program code. In these embodiments, the combination of hardware elements and program code may be referred to as a particular type of circuitry.

The term "processor circuitry" as used herein refers to, is part of, or includes circuitry capable of sequentially and automatically carrying out a sequence of arithmetic or logical operations, or recording, storing, and/or transferring digital data. The term "processor circuitry" may refer to one or more application processors, one or more baseband processors, a physical central processing unit (CPU), a single-core processor, a dual-core processor, a triple-core processor, a quad-core processor, and/or any other device capable of executing or otherwise operating computer-executable instructions, such as program code, software modules, and/or functional processes. The terms "application circuitry" and/or "baseband circuitry" may be considered synonymous to, and may be referred to as, "processor circuitry."

The term "interface circuitry" as used herein refers to, is part of, or includes circuitry that enables the exchange of information between two or more components or devices. The term "interface circuitry" may refer to one or more hardware interfaces, for example, buses, I/O interfaces, peripheral component interfaces, network interface cards, and/or the like.

The term "user equipment" or "UE" as used herein refers to a device with radio communication capabilities and may describe a remote user of network resources in a communications network. The term "user equipment" or "UE" may be considered synonymous to, and may be referred to as, client, mobile, mobile device, mobile terminal, user terminal, mobile unit, mobile station, mobile user, subscriber, user, remote station, access agent, user agent, receiver, radio equipment, reconfigurable radio equipment, reconfigurable mobile device, etc. Furthermore, the term "user equipment" or "UE" may include any type of wireless/wired device or any computing device including a wireless communications interface.

The term "network element" as used herein refers to physical or virtualized equipment and/or infrastructure used to provide wired or wireless communication network services. The term "network element" may be considered synonymous to and/or referred to as a networked computer, networking hardware, network equipment, network node, router, switch, hub, bridge, radio network controller, RAN device, RAN node, gateway, server, virtualized VNF, NFVI, and/or the like.

The term "computer system" as used herein refers to any type interconnected electronic devices, computer devices, or components thereof. Additionally, the term "computer system" and/or "system" may refer to various components of a computer that are communicatively coupled with one another. Furthermore, the term "computer system" and/or "system" may refer to multiple computer devices and/or multiple computing systems that are communicatively coupled with one another and configured to share computing and/or networking resources.

The term "appliance," "computer appliance," or the like, as used herein refers to a computer device or computer system with program code (e.g., software or firmware) that is specifically designed to provide a specific computing resource. A "virtual appliance" is a virtual machine image to be implemented by a hypervisor-equipped device that virtualizes or emulates a computer appliance or otherwise is dedicated to provide a specific computing resource.

The term "resource" as used herein refers to a physical or virtual device, a physical or virtual component within a computing environment, and/or a physical or virtual component within a particular device, such as computer devices, mechanical devices, memory space, processor/CPU time, processor/CPU usage, processor and accelerator loads, hardware time or usage, electrical power, input/output operations, ports or network sockets, channel/link allocation, throughput, memory usage, storage, network, database and applications, workload units, and/or the like. A "hardware resource" may refer to compute, storage, and/or network resources provided by physical hardware element(s). A "virtualized resource" may refer to compute, storage, and/or network resources provided by virtualization infrastructure to an application, device, system, etc. The term "network resource" or "communication resource" may refer to resources that are accessible by computer devices/systems via a communications network. The term "system resources" may refer to any kind of shared entities to provide services, and may include computing and/or network resources. System resources may be considered as a set of coherent functions, network data objects or services, accessible through a server where such system resources reside on a single host or multiple hosts and are clearly identifiable.

The term "channel" as used herein refers to any transmission medium, either tangible or intangible, which is used to communicate data or a data stream. The term "channel" may be synonymous with and/or equivalent to "communications channel," "data communications channel," "transmission channel," "data transmission channel," "access channel," "data access channel," "link," "data link," "carrier," "radiofrequency carrier," and/or any other like term denoting a pathway or medium through which data is communicated. Additionally, the term "link" as used herein refers to a connection between two devices through a RAT for the purpose of transmitting and receiving information.

The terms "instantiate," "instantiation," and the like as used herein refers to the creation of an instance. An "instance" also refers to a concrete occurrence of an object, which may occur, for example, during execution of program code.

The terms "coupled," "communicatively coupled," along with derivatives thereof are used herein. The term "coupled" may mean two or more elements are in direct physical or electrical contact with one another, may mean that two or more elements indirectly contact each other but still cooperate or interact with each other, and/or may mean that one or more other elements are coupled or connected between the elements that are said to be coupled with each other. The term "directly coupled" may mean that two or more elements are in direct contact with one another. The term "communicatively coupled" may mean that two or more elements may be in contact with one another by a means of communication including through a wire or other interconnect connection, through a wireless communication channel or ink, and/or the like.

The term "information element" refers to a structural element containing one or more fields. The term "field" refers to individual contents of an information element, or a data element that contains content.

## Claims

1. A method performed by an electronic device, comprising:
identifying one or more measurements related to channel quality of a Bluetooth low energy (LE) transmission; and
encoding, for transmission to the broadcast transmitter, one or more indications of the one or more measurements, wherein the one or more indications are to cause the broadcast transmitter to adjust a transmission parameter of a subsequent Bluetooth LE transmission.

2. The electronic device of claim 1, further comprising performing the one or more measurements by the electronic device.

3. The methodof claims 1 or 2, further comprising performing the one or more measurements by a second electronic device that is wirelessly coupled with the electronic device, and wherein values related to the one or more measurements are received by the electronic device from the second electronic device.

4. The method of claims 1, 2, or 3, further comprising providing the one or more indications to the broadcast transmitter via a wi-fi control plane.

5. The method of claim 4, further comprising providing the one or more indications to the broadcast transmitter via one or more wi-fi access point (AP) beacons or via transmission to a server that is communicatively coupled with the electronic device and the broadcast transmitter.

6. The method of claims 1, 2, or 3, further comprising providing the one or more indications to the broadcast transmitter via a Bluetooth control plane.

7. The method of claim 6, further comprising configuring the one or more processors to register with the Bluetooth transmitter based on Universal Hashing and Bluetooth Periodic Advertising with Response (PAWR) and wherein the one or more indications are provided to the broadcast transmitter via one or more Bluetooth advertising beacons.

8. The method of claims 1, 2, 3, 4, 5, 6, or 7, wherein the Bluetooth LE broadcast is an Auracast broadcast.

9. An electronic device comprising:
one or more processors; and
one or more non-transitory computer-readable media comprising instructions that, upon execution of the instructions by the one or more processors, are to cause the electronic device to:
broadcast a first Bluetooth low energy (LE) transmission;
identify, from a second electronic device, one or more indications of one or more measurements related to channel quality of the first Bluetooth LE transmission;
adjust, based on the one or more indications, one or more transmission parameters related to the first Bluetooth LE transmission; and
broadcast, based on the adjusted one or more transmission parameters, a second Bluetooth LE transmission.

10. The electronic device of claim 9, wherein the one or more measurements are measurements performed by the second electronic device or wherein the one or more measurements are measurements performed by a third electronic device that is wirelessly coupled to, and collocated with, the second electronic device.

11. The electronic device of claim 9 or 10, wherein the one or more indications are provided to a broadcast transmitter via a wi-fi control plane or wherein the one or more indications are provided to a broadcast transmitter via a Bluetooth control plane.

12. One or more non-transitory computer-readable media (NTCRM) comprising instructions that, upon execution of the instructions by one or more processors of an electronic device, are to cause the electronic device to:
identify, from a broadcast transmitter, a first Bluetooth low energy (LE) transmission that was transmitted with a transmission parameter using a first value;
identify one or more measurements related to channel quality of the first Bluetooth LE transmission;
provide one or more indications of the one or more measurements to a second electronic device that is communicatively coupled with the broadcast transmitter; and
identify, from the broadcast transmitter based on the one or more measurements, a second Bluetooth LE transmission that was transmitted with the transmission parameter using a second value that is different than the first value.

13. The one or more NTCRM of claim 12, wherein the transmission parameter is related to physical layer (PHY) modulation, timing interval, or immediate repetition count (IRC).

14. The one or more NTCRM of claim 12 or 13, wherein the one or more measurements are related to received signal strength indicator (RSSI), reference signal received power (RSRP), signal to interference noise ratio (SINR), packet drops, or packet error rate (PER).

15. The one or more NTCRM of claim 16, wherein the Bluetooth LE broadcast is an Auracast broadcast or wherein the second electronic device is to provide the one or more indications of the one or more measurements to the broadcast transmitter via a wi-fi control plane or a Bluetooth control plane.
